# FASCICULE DE BREVET EUROPEEN

(11) **EP 0 444 979 B1**
(45) Date de publication et mention de la délivrance du brevet: **05.05.1993**
(21) Numéro de dépôt: 91400211.8
(22) Date de dépôt: 29.01.1991
(51) Int. Cl.: F16B 37/04

(54) **Ecrou en cage perfectionné**
Käfigmutter
Caged nut

(30) Priorité: 01.03.1990 FR 9002591
(43) Date de publication de la demande: 04.09.1991
(73) Titulaire: RAPID S.A., F-75017 Paris (FR)
(72) Inventeur: Dubost, Dominique, F-78170 La Celle Saint Cloud (FR)
(74) Mandataire: Durand, Yves Armand Louis

(56) Documents cités:
- US-A- 2 433 607
- US-A- 2 779 377

## Description

La présente invention a essentiellement pour objet un écrou en cage perfectionné.

On connaît déjà, d'après par exemple EP-A-0423021, publié le 17.04.91, état de la technique selon l'art. 54,3 CBE, appartenant à la demanderesse, des écrous encagés comprenant une platine pourvue de languettes tombées et d'un orifice qui est traversé par un écrou à embase et dont la forme est telle que la rotation de l'écrou par rapport à la platine est empêchée.

Cette platine ainsi que l'écrou sont montés dans une pièce en forme de U pouvant être clippée dans les orifices d'un panneau ou analogue de façon à permettre la fixation par vissage sur ce panneau d'un élément quelconque.

Toutefois, la demanderesse a découvert que les écrous du type ci-dessus pouvaient être améliorés sur le plan de la structure, et surtout être simplifiés de façon à être moins coûteux sans que cela nuise à leur fiabilité, bien au contraire.

A cet effet, l'invention a pour objet un écrou en cage perfectionné du type comprenant une platine pourvue de languettes tombées et d'un orifice qui est traversé par un écrou à embase et dont la forme est telle que la rotation de l'écrou par rapport à la platine est empêchée, la platine étant maintenue prisonnière entre l'embase de l'écrou et une bague montée de préférence à force sur la partie supérieure de l'écrou opposée à l'embase, et les languettes tombées de la platine formant des pattes d'accrochage permettant le montage direct par clippage de la platine associée à l'écrou par la bague sur un panneau ou analogue.

Cet écrou en cage est encore caractérisé en ce que la bague précitée est en un matériau non agressif, tel que par exemple une matière synthétique élastiquement déformable, tandis que les languettes tombées de la platine formant pattes d'accrochage possèdent une forme différente.

Suivant un mode de réalisation préféré, l'une des languettes tombées présente une section transversale sensiblement en forme de L, et l'autre languette tombée présente, en section transversale, sensiblement la forme d'un V dont l'une des branches est plus courte que l'autre.

On précisera ici que l'extrémité libre de la branche du V la plus courte est située sensiblement dans le plan défini par la branche horizontale du L précité.

Selon encore une autre caractéristique de l'écrou en cage selon cette invention, la platine précitée comporte deux bords tombés et opposés prenant appui sur l'embase de l'écrou pour la raidir et surélever la platine pour qu'elle se situe au-dessus du jeu annulaire entre embase et écrou.

L'écrou en cage selon cette invention est encore caractérisé en ce que l'orifice ménagé dans la platine présente une forme hexagonale coopérant sensiblement sans jeu avec la périphérie hexagonale de l'écrou sur laquelle est emmanchée à force la bague précitée.

Ainsi, la bague permet d'assembler de façon simple et peu coûteuse la platine à l'écrou, de façon à réaliser ainsi une pièce unique commode à manutentionner.

Mais d'autres avantages et caractéristiques de l'invention apparaîtront mieux dans la description détaillée qui suit et se refère aux dessins annexés, donnés uniquement à titre d'exemple, et dans lesquels :

La figure 1 est une vue en élévation et de côté d'un écrou en cage conforme à cette invention.

La figure 2 est une vue en perspective de la platine.

La figure 3 est une vue en plan et de dessus selon la flèche III de la figure 1, d'un écrou en cage selon cette invention.

La figure 4 est une vue en coupe axiale de cet écrou en cage en position montée sur un support, tel que par exemple un panneau.

Suivant un exemple de réalisation, et en se reportant aux figures, on voit qu'un écrou en cage conforme à l'invention comprend essentiellement une platine ou analogue 1 munie de deux languettes tombées et opposées 2, 3 et d'un orifice 4 qui est traversé par un écrou 5 dont la face d'appui est pourvue d'une embase tournante ou non 6.

L'orifice 4 dans la platine 1, suivant l'exemple représenté, présente une forme hexagonale coopérant sans jeu avec la périphérie supérieure 7 elle aussi hexagonale de l'écrou 7, de sorte que, comme on le décrira en détail plus loin, la platine 1 empêche la rotation de l'écrou 5 par rapport à ladite platine lors du vissage.

Sur la périphérie ou partie supérieure 7 de l'écrou 5, est montée à force une bague 8 en une matière synthétique élastiquement déformable et qui, lors de son montage, présente l'avantage de ne pas détériorer ni agresser la périphérie supérieure 7 de l'écrou 5, et cela tout en permettant une solidarisation correcte de la platine 1 et de l'écrou 5.

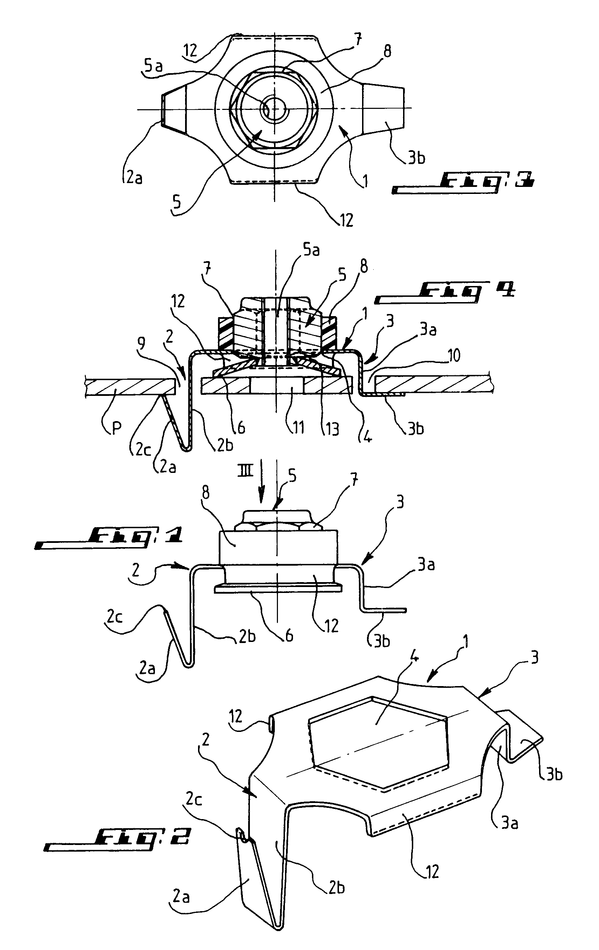

Comme on le voit bien sur les figures 1, 2 et 4, les languettes tombées et opposées 2, 3 possèdent une forme différente et peuvent s'accrocher sur un panneau ou analogue P après passage respectivement dans des orifices 9, 10 dudit panneau qui, naturellement, comporte un autre orifice 11 au droit de l'orifice taraudé 5a de l'écrou 5 pour permettre le passage d'une vis (non représentée).

La languette tombée 2 présente, en section transversale, la forme d'un V dont l'une 2a des branches est plus courte que l'autre branche 2b.

La languette tombée 3 présente en section transversale sensiblement la forme d'un L possédant une branche verticale 3a et une branche sensiblement horizontale 3b.

Comme il apparaît clairement sur la figure 4, l'extrémité libre 2c de la branche 2a la plus courte de la languette 2 est située sensiblement dans le plan défini par la branche horizontale 3b de l'autre languette tombée 3.

On voit en 12 deux bords tombés et opposés appartenant à la platine 1 et formés par repliement de cette platine, ces bords tombés s'étendant sensiblement orthogonalement aux deux languettes tombées 2 et 3.

Les bords tombés 12, comme on le voit bien sur les figures 1 et 4, prennent appui sur l'embase 6 de l'écrou 5 de façon à raidir cette embase et également à surélever la platine 1 pour qu'elle se situe au-dessus du jeu annulaire ou chanfrein 13 existant entre l'embase 6 et la partie inférieure de l'écrou 5.

Ainsi, l'orifice 4 de la platine 1 se situera au niveau de la partie supérieure hexagonale 7 de l'écrou 5 pour empêcher la rotation de celui-ci lors du vissage, étant entendu que la platine 1 est prise en sandwich entre la bague en matière synthétique 8 et l'embase 6 de l'écrou 5. En se reportant plus particulièrement à la figure 3, on observera que la bague 8 s'accrochera, sans les blesser, sur les arêtes entre les pans formant la forme de manoeuvre ou périphérie hexagonale 7 de l'écrou 5.

Pour monter l'écrou en cage qui vient d'être décrit sur le panneau P, on insère d'abord la languette 3 en forme de L dans l'orifice 10 du panneau, puis on monte par pression et clippage l'autre languette tombée 2 dans l'orifice 9 dudit panneau, de sorte que l'extrémité 2c de cette languette viendra s'accrocher sous la face inférieure dudit panneau.

La platine 1 assurera par conséquent le maintien de l'écrou 5 en attendant et pendant l'opération de vissage, étant entendu que ladite platine, après avoir été clippée dans les deux orifices 9, 10 du panneau P pourra être ajustée par déplacement sur le panneau dans une direction ou une autre. En outre, la platine 1 bloquera l'écrou 5 en rotation pendant l'opération de vissage, de sorte que ladite platine possède finalement deux fonctions.

Bien entendu, l'invention n'est nullement limitée au mode de réalisation décrit et illustré qui n'a été donné qu'à titre d'exemple.

C'est ainsi que la matière de la bague 8 montée par serrage élastique sur la périphérie de l'écrou pourra être quelconque et en tout cas non susceptible de détériorer ou d'agresser ladite partie supérieure lors du montage. Egalement, l'embase de l'écrou pourra être montée à rotation libre sur l'écrou, ou non, de même que la forme des pattes d'accrochage de la platine sur le panneau pourra être autre que celle représentée.

## Revendications

1. Ecrou en cage perfectionné du type comprenant une platine (1) pourvue de languettes tombées (2, 3) et d'un orifice (4) qui est traversé par un écrou (5) à embase (6) et dont la forme est telle que la rotation de l'écrou (5) par rapport à la platine (1) est empêchée, la platine (1) étant maintenue prisonnière entre l'embase (6) de l'écrou (5) et une bague (8) montée de préférence à force sur la partie supérieure (7) de l'écrou opposée à l'embase (6), et les languettes tombées (2, 3) de la platine (1) formant des pattes d'accrochage permettant le montage direct par clippage de la platine (1) associée à l'écrou (5) par la bague (6) sur un panneau ou analogue (P).

2. Ecrou en cage selon la revendication 1, caractérisé en ce que la bague précitée (8) est en un matériau non agressif tel que par exemple une matière synthétique élastiquement déformable, tandis que les languettes tombées (2, 3) de la platine formant pattes d'accrochage possèdent une forme différente.

3. Ecrou en cage selon la revendication 1 ou 2, caractérisé en ce que l'une (3) des languettes tombées présente une section transversale sensiblement en forme de L, et l'autre languette tombée (2) présente, en section transversale, sensiblement la forme d'un V dont l'une (2a) des branches est plus courte que l'autre (2b).

4. Ecrou en cage selon la revendication 3, caractérisé en ce que l'extrémité libre (2c) de la branche (2a) du V la plus courte est située sensiblement dans le plan défini par la branche horizontale (3b) du L précité.

5. Ecrou en cage selon l'une des revendications précédentes, caractérisé en ce que la platine précitée (1) comporte deux bords tombés et opposés (12) prenant appui sur l'embase 6 de l'écrou (5) pour la raidir et surélever la platine (1) pour qu'elle se situe au-dessus du jeu annulaire (13) entre embase (6) et écrou (5).

6. Ecrou en cage selon l'une des revendications 1 à 5, caractérisé en ce que l'orifice précité (4) ménagé dans la platine (1) présente une forme hexagonale coopérant sensiblement sans jeu avec la périphérie hexagonale (7) de l'écrou (5) sur laquelle est emmanchée à force la bague précitée (8).

## Patentansprüche

1. Vervollkommene Käfigmutter, derjenigen Gattung mit einer mit umgebogenen Zungen (2,3) und mit einer Oeffnung (4) versehenen Platte (1), welche Oeffnung durch eine Mutter (5) mit Bund (6) durchsetzt wird und deren Gestalt derart ist, dass das Verdrehen der Mutter (5) in Bezug auf die Platte (1) verhindert wird, wobei die Platte (1) zwischen dem Bund (6) der Mutter (5) und einem vorzugsweise mit Gewalt auf den dem Bund (6) entgegengesetzen oberen Teil (7) der Mutter aufgesetzten Ring (8) gefangen gehalten wird und die umgebogenen Zungen (2,3) der Platte (1) Anhackungsansätze bilden, die das unmittelbare Anbringen der der Mutter (5) zugeordneten Platte (1) durch den Ring (6) an einer Tafel oder dergleichen (P) gestatten.

2. Käfigmutter nach Anspruch 1, dadurch gekennzeichnet, dass der vorgenannte Ring (8) aus einem nicht agressiven Werkstoff, wie zum Beispiel einem elastisch verformbaren Kunststoff, besteht, während die Verhackungsansätze bildenden umgebogenen Zungen (2,3) der Platte eine unterschiedliche Gestalt aufweisen.

3. Käfigmutter nach Anspruch 1 oder 2, dadurch gekennzeichnet, dass die eine (3) der umgebogenen Zungen im Querschnitt eine etwa L-förmige Gestalt aufweist und die andere umgebogene Zunge (2) im Querschnitt etwa die Gestalt eines V's aufweist, dessen eine (2a) der Schenkel kürzer als der andere (2b) ist.

4. Käfigmutter nach Anspruch 3, dadurch gekennzeichnet, dass das freie Ende (2c) des kürzeren Schenkels (2a) des V's etwa in der durch den waagerechten Schenkel (3b) des vorgenannten L's festgelegten Ebene liegt.

5. Käfigmutter nach einem der vorangehenden Ansprüche, dadurch gekennzeichnet, dass die vorgenannte Platte (1) zwei umgebogene und entgegengesetzte, sich an dem Bund (6) der Mutter (5) abstützende Ränder (12) aufweist, um diesen zu versteifen und die Platte (1) zu überhöhen, damit sie sich oberhalb des ringförmigen Spieles (13) zwischen Bund (6) und Mutter (5) befindet.

6. Käfigmutter nach einem der Ansprüche 1 bis 5, dadurch gekennzeichnet, dass die vorgenannte in der Platte (1) gebildete Oeffnung (4) eine sechseckige Gestalt aufweist, die mit dem sechseckigen Umfang (7) der Mutter (5), auf welchem der vorgenannte Ring (8) mit Gewalt aufgesetzt ist, etwa ohne Spiel zusammenwirkt.

## Claims

1. Improved caged nut of the type comprising a plate (1) provided with down-turned tongues (2, 3) and with an aperture (4) through which extends a nut (5) with a base flange (6) and the shape of which is such that the rotation of the nut (5) with respect to the plate (1) is prevented, the plate (1) being kept entrapped between the base flange (6) of the nut (5) and a ring (8) mounted preferably through force-fitting onto the upper portion (7) of the nut opposite to the base flange (6) and the downward turned tongues (2, 3) of the plate (1) forming hooking lugs allowing the direct mounting through clipping of the plate (1) associated with the nut (5) by the ring (6) onto a panel or the like (P).

2. Caged nut according to claim 1, characterized in that the aforesaid ring (8) is of a non-agressive material such for example as an elastically deformable synthetic material whereas the downward turned tongues (2, 3) of the plate forming hooking lugs have a different shape.

3. Caged nut according to claim 1 or 2, characterized in that one (3) of the downward turned tongues exhibits a substantially L-shaped cross-section and the other downward turned tongue (2) exhibits in cross-section substantially the shape of a V one (2a) of the legs of which is shorter than the other one (2b).

4. Caged nut according to claim 3, characterized in that the free end (2c) of the shorter leg (2a) of the V is located substantially in the plane defined by the horizontal leg (3b) of the aforesaid L.

5. Caged nut according to one of the foregoing claims, characterized in that the aforesaid plate (1) comprises two flanged and opposite edges (12) bearing upon the base flange (6) of the nut (5) for stiffening it and for raising the plate (1) in order that it be located above the annular clearance (13) between the base flange (6) and the nut (5).

6. Caged nut according to one of claims 1 to 5, characterized in that the aforesaid aperture (4) formed in the plate (1) exhibits a hexagonal shape co-operating substantially without any play with the hexagonal periphery (7) of the nut (5) onto which the aforesaid ring (8) is force-fitted.
